# EUROPEAN PATENT SPECIFICATION

(11) **EP 3 174 174 B1**
(45) Date of publication and mention of the grant of the patent: **24.07.2019**
(21) Application number: 15196959.9
(22) Date of filing: 30.11.2015
(51) Int. Cl.: H02J 7/00, H01M 10/42, H01M 10/46, H01R 13/66

(54) **POWER BANK CHARGING SYSTEM**
POWERBANK-LADESYSTEM
SYSTÈME DE CHARGEMENT DE BANQUE DE PUISSANCE

(43) Date of publication of application: 31.05.2017
(73) Proprietor: Getac Technology Corporation, Taipei City 11568 (TW)
(72) Inventor: HSIUNG, Ta-Sung, 11568 Taipei City (TW)
(74) Representative: Viering, Jentschura & Partner mbB Patent- und Rechtsanwälte

(56) References cited:
- EP-A1- 2 835 073
- US-A1- 2011 164 351
- US-A1- 2013 080 797
- US-A1- 2015 303 724

## Description

### BACKGROUND OF THE INVENTION

### FIELD OF THE INVENTION

The present invention relates to charging devices and more particularly to a power bank charging system.

### DESCRIPTION OF THE PRIOR ART

Due to rapid development of mobile devices, conventional mobile devices usually support high-resolution screens and functions, such as taking pictures, watching videos, and wireless connection to the Internet. However, the aforesaid functions of conventional mobile devices come at the price of speedy consumption of the power supplied by the batteries disposed in the mobile devices. As a result, users have to access a power bank for charging conventional mobile devices to prevent them from running out of power.

In general, most power banks use USB ports or micro-USB ports in charging a battery. However, USB specifications and micro-USB specifications put a limit on the electrical current of USB and micro-USB (for example, under the existing specifications, just a maximum current of 2A can pass through USB connection lines and micro USB connection lines for use in charging batteries) and thus restrict the charging speed of the power banks. To meet the requirement of quick charging and charge a power bank fully in a short period of time, it is necessary to use a control chip of quick charging or switch to USB C-type specifications, albeit incurring high costs.

US 2013/0080797 A1 and US 2015/0303724 A1 show prior art systems, where fast charging is povided by using control chips and using both data and power pins for power supply.

### SUMMARY OF THE INVENTION

The present invention provides a power bank charging system according to claim 1, which efficiently increases the charging speed of a power bank. Preferred embodiments are defined in dependent claims.

In conclusion, in an embodiment of the present invention, the power bank charging system simultaneously uses a power pin and a data transmission pin to provide the charging current to a power bank device to thereby increase a total charging current of the power bank device, shorten charging time, and efficiently increase the charging speed of the power bank device.

### BRIEF DESCRIPTION OF THE DRAWINGS

To render the features and advantages of the present invention more obvious and comprehensible, the present invention is hereunder illustrated with embodiments, drawings, and a detailed description.
FIG. 1 is a schematic view of a power bank charging system according to an embodiment of the present invention; and
FIG. 2 is a schematic view of an exemplary power bank system.

### DETAILED DESCRIPTION OF THE EMBODIMENTS

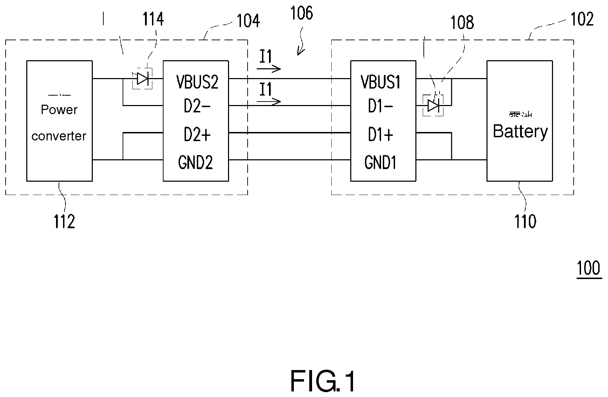

Referring to FIG. 1, there is shown a schematic view of a power bank charging system according to an embodiment of the present invention. As shown in FIG. 1, a power bank charging system 100 comprises a power bank device 102 and a transformer 104. The power bank device 102 is coupled to the transformer 104 through a transmission cable 106. The transmission cable 106 is exemplified by a cable which conforms with USB specifications or a cable which conforms with micro-USB specifications. The power bank device 102 comprises a diode 108 and a battery 110. The diode 108 is coupled between power pin VBUS1 and data transmission pin D1-, such that charging current I1 on data transmission pin D1- unidirectionally flows toward power pin VBUS1. The anode of the diode 108 is coupled to data transmission pin D1-. The cathode of diode 108 is coupled to power pin VBUS1. The battery 110 is coupled to power pin VBUS1 and ground pin GND1 and coupled to data transmission pin D1- through the diode 108. Data transmission pin D1- is short-circuited to ground pin GND1. The battery 110 has its positive terminal coupled to power pin VBUS1 and its negative terminal coupled to ground pin GND1.

The transformer 104 comprises a power converter 112 and a diode 114. The power converter 112 is coupled to data transmission pin D2-, data transmission pin D2+ and ground pin GND2 and coupled to power pin VBUS2 through the diode 114. Data transmission pin D2+ is short-circuited to ground pin GND2. The diode 114 is coupled between the power converter 112 and power pin VBUS2, such that charging current I1 provided by the power converter 112 unidirectionally flows toward power pin VBUS2. Power pin VBUS2 and data transmission pin D2- are coupled to power pin VBUS1 and data transmission pin D1- through the transmission cable 106, respectively, whereas data transmission pin D2+ and ground pin GND2 are coupled to data transmission pin D1+ and ground pin GND1 through the transmission cable 106, respectively, such that a charging circuit is built between the power converter 112 and the battery 110. The aforesaid power pin VBUS1, data transmission pin D1-, data transmission pin D1+ and ground pin GND1 are exemplified by connection pins of a USB interface, whereas power pin VBUS2, data transmission pin D2-, data transmission pin D2+ and ground pin GND2 are exemplified by connection pins of a micro USB interface, but the present invention is not limited thereto.

The power converter 112 receives AC power and enables the AC power to undergo AC/DC conversion, so as to generate charging current 11, as shown in FIG. 1. The charging current I1 generated from the power converter 112 is provided to power pin VBUS2 and data transmission pin D2- and transmitted to power pin VBUS1 and data transmission pin D1- through the transmission cable 106, such that the battery 110 receives charging current I1 from power pin VBUS1 and the rectifying unit 108 and thus is charged. In this embodiment, since the power bank charging system 100 simultaneously uses a power pin and a data transmission pin to provide charging current I1 to the battery 110, the power bank charging system 100 effects a 100% increase in the total charging current of the power bank device 102 to thereby shorten the charging time of the power bank device 102 and efficiently increase the charging speed of the power bank device 102, when compared with any conventional power bank charging systems which provide a charging current to a power bank device through a power pin only. For example, if USB specifications merely allows a current of 2A to flow from power pin VBUS2 to power pin VBUS1 through the transmission cable 106, the power bank charging system 100, a charging current can be transmitted through data transmission pin D2-, the transmission cable 106, and data transmission pin D1-, before the current of 2A is transmitted to the power bank device 102. Hence, the total charging current of 4A is attained.

In this embodiment, the charging path which passes the power pin matches the charging path which passes the data transmission pin, so as to maximize the total charging current within the maximum current restriction range supported by the transmission cable 106. The diode 114 has its anode coupled to the power converter 112, and its cathode coupled to power pin VBUS2.

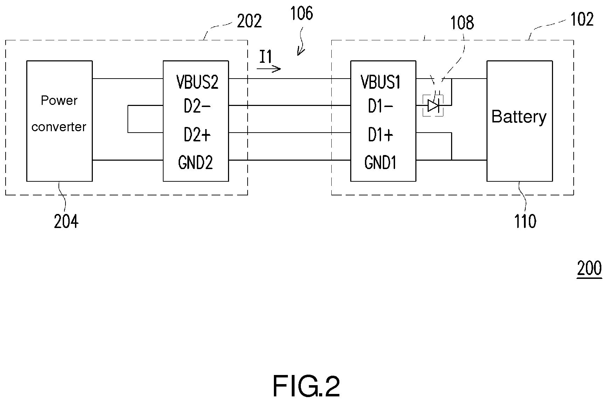

In an exemplary system, when the power bank device 102 is coupled to a conventional transformer, as shown in FIG. 2, no faster charging is provided. A conventional transformer 202 differs from the transformer 104 of the embodiment illustrated with FIG. 1 in that: the conventional transformer 202 does not comprise the diode 114; a power converter 204 only provides charging current I1 to power pin VBUS2; a short circuit is developed between data transmission pin D2- and data transmission pin D2+; and no short circuit is developed between data transmission pin D2+ and ground pin GND2. The power bank device 102 comprises the diode 108 to thereby prevent the current of power pin VBUS1 from flowing toward data transmission pin D1- and prevent charging current I1 from flowing toward the pins through the short circuit path between data transmission pin D2- and data transmission pin D2+ and the short circuit path between data transmission pin D1 + and ground pin GND1, thereby precluding the situation where the power bank device 102 cannot be charged. Hence, the diode 108 ensures that charging current I1 on data transmission pin D1 - can unidirectionally flow toward power pin VBUS1 to thereby suit the power bank device 102 to the conventional transformer 202 and enhance the ease of use of the power bank device 102.

In conclusion, in an embodiment of the present invention, a power bank charging system simultaneously uses a power pin and a data transmission pin to provide a charging current to a power bank device to thereby increase the total charging current of the power bank device, shorten charging time, and efficiently increase the charging speed of the power bank device.

Although the present invention is disclosed above by embodiments, the embodiments are not restrictive of the present invention. Any person skilled in the art can make some changes and modifications to the embodiments without departing from the scope of the present invention. Accordingly, the legal protection for the present invention is defined by the appended claims.

## Claims

1. A power bank charging system (100), comprising:
a power bank device (102), comprising:
a first power pin (VBUS1), a first ground pin (GND1), a first data transmission pin (D1-), a second data transmission pin (D1+);
a first diode (108) coupled between the first power pin (VBUS1) and the first data transmission pin (D1-), wherein an anode of the first diode (108) coupled to the first data transmission pin (D1-) and a cathode coupled to the first power pin (VBUS 1); and
a battery (110) coupled to the first power pin (VBUS1) and the first ground pin (GND1) and coupled to the first data transmission pin (D1-) through the first diode (108), wherein the second data transmission pin (D1+) is short-circuited to the first ground pin (GND1), and the battery (110) is configured to receive the charging current (11) from the first power pin (VBUS1) and the first diode (108) and thus is charged; and
a transformer (104), comprising:
a second power pin (VBUS2), a second ground pin (GND2), a third data transmission pin (D2-), a fourth data transmission pin (D2+);
a power converter (112) coupled to the third data transmission pin (D2-), the fourth data transmission pin (D2+) and the second ground pin (GND2), wherein the fourth data transmission pin (D2+) is short-circuited to the second ground pin (GND2), and the power converter (112) is configured to enable AC power to undergo AC/DC conversion, so as to provide the charging current (I1) to the second power pin (VBUS2) and the third data transmission pin (D2-); and
a second diode (114) coupled between the power converter (112) and the second power pin (VBUS2), wherein an anode of the second diode (114) coupled to the power converter and a cathode coupled to the second power pin (VBUS2); and
wherein the power bank device is connectable to the transformer.

2. The power bank charging system (100) of claim 1, wherein the second power pin (VBUS2) and the third data transmission pin (D2-) are coupled to the first power pin (VBUS1) and the first data transmission pin (D1-) through a transmission cable (106), respectively, whereas the fourth data transmission pin (D2+) and the second ground pin (GND2) are coupled to the second data transmission pin (D1+) and the first ground pin (GND1) through the transmission cable (106), respectively;
the transmission cable (106) thereby providing the charging current (11) path.

3. The power bank charging system (100) of claim 1, wherein the second power pin (VBUS2), the third data transmission pin (D2-), the fourth data transmission pin (D2+) and the second ground pin (GND2) are connection pins of a USB interface, whereas the first power pin (VBUS1), the first data transmission pin (D1-), the second data transmission pin (D1+) and the first ground pin (GND1) are connection pins of a micro USB interface.

## Patentansprüche

1. Ein Powerbank-Ladesystem (100), aufweisend:
eine Powerbank-Vorrichtung (102), aufweisend:
einen ersten Stromkontakt (VBUS1), einen ersten Erdungskontakt (GND1), einen ersten Datenübertragungskontakt (D1-), einen zweiten Datenübertragungskontakt (D1+);
eine erste Diode (108), welche zwischen den ersten Stromkontakt (VBUS1) und den ersten Datenübertragungskontakt (D1-) geschaltet ist, wobei eine Anode der ersten Diode (108) mit dem ersten Datenübertragungskontakt (D1-) verbunden ist und eine Kathode mit dem ersten Stromkontakt (VBUS1) verbunden ist; und
eine Batterie (110), welche mit dem ersten Stromkontakt (VBUS1) und dem ersten Erdungskontakt (GND1) verbunden ist, und welche durch die erste Diode (108) mit dem ersten Datenübertragungskontakt (D1-) verbunden ist, wobei der zweite Datenübertragungskontakt (D1+) mit dem ersten Erdungskontakt (GND1) kurzgeschlossen ist, und wobei die Batterie (110) konfiguriert ist, um den Ladestrom (I1) von dem ersten Stromkontakt (VBUS1) und der ersten Diode (108) zu empfangen und dadurch geladen wird; und
einen Transformator (104), aufweisend:
einen zweiten Stromkontakt (VBUS2), einen zweiten Erdungskontakt (GND2), einen dritten Datenübertragungskontakt (D2-), einen vierten Datenübertragungskontakt (D2+);
einen Stromwandler (112), welcher mit dem dritten Datenübertragungskontakt (D2-), dem vierten Datenübertragungskontakt (D2+) und dem zweiten Erdungskontakt (GND2) verbunden ist, wobei der vierte Datenübertragungskontakt (D2+) mit dem zweiten Erdungskontakt (GND2) kurzgeschlossen ist, und wobei der Stromwandler (112) konfiguriert ist, um eine Wechselstrom-Gleichstrom-Umwandlung eines Wechselstroms zu ermöglichen, um den Ladestrom (I1) an den zweiten Stromkontakt (VBUS2) und den dritten Datenübertragungskontakt (D2-) bereitzustellen; und
eine zweite Diode (114), welche zwischen den Stromwandler (112) und den zweiten Stromkontakt (VBUS2) geschaltet ist, wobei eine Anode der zweiten Diode (114) mit dem Stromwandler verbunden ist und eine Kathode mit dem zweiten Stromkontakt (VBUS2) verbunden ist; und
wobei die Powerbank-Vorrichtung mit dem Transformator verbunden werden kann.

2. Das Powerbank-Ladesystem (100) gemäß Anspruch 1, wobei der zweite Stromkontakt (VBUS2) und der dritte Datenübertragungskontakt (D2-) mit dem ersten Stromkontakt (VBUS1) beziehungswiese dem ersten Datenübertragungskontakt (D1-) durch ein Übertragungskabel (106) verbunden ist, wobei der vierte Datenübertragungskontakt (D2+) und der zweite Erdungskontakt (GND2) mit dem zweiten Datenübertragungskontakt (D1+) beziehungsweise dem dem ersten Erdungskontakt (GND1) durch das Datenübertragungskabel (106) verbunden ist, wobei das Datenübertragungskabel (106) dadurch den Ladestrom (I1)-Pfad bereitstellt.

3. Das Powerbank-Ladesystem (100) gemäß Anspruch 1, wobei der zweite Stromkontakt (VBUS2), der dritte Datenübertragungskontakt (D2-), der vierte Datenübertragungskontakt (D2+) und der zweite Erdungskontakt (GND2) Verbindungskontakte einer USB-Schnittstelle sind, wobei der erste Stromkontakt (VBUS1), der erste Datenübertragungskontakt (D1-), der zweite Datenübertragungskontakt (D1+) und der erste Erdungskontakt (GND1) Verbindungskontakte einer Mikro-USB-Schnittstelle sind.

## Revendications

1. Système de chargement portatif (100), qui comprend :
un chargeur portatif (102), comprenant :
une première broche d'alimentation (VBUS1), une première broche de terre (GND1), une première broche de transmission de données (D1-), une seconde broche de transmission de données (D1+) ;
une première diode (108) couplée entre la première broche d'alimentation (VBUS1) et la première broche de transmission de données (D1-), dans lequel une anode de la première diode (108) est couplée à la première broche de transmission de données (D1-) et une cathode est couplée à la première broche d'alimentation (VBUS1) ; et
une batterie (110) couplée à la première broche d'alimentation (VBUS1) et à la première broche de terre (GND1) et couplée à la première broche de transmission de données (D1-) par le biais de la première diode (108), dans lequel la seconde broche de transmission de données (D1+) est court-circuitée avec la première broche de terre (GND1), et la batterie (110) est configurée pour recevoir le courant de chargement (I1) de la première broche d'alimentation (VBUS1) et de la première diode (108) et est ainsi chargée ; et
un transformateur (104), comprenant :
une seconde broche d'alimentation (VBUS2), une seconde broche de terre (GND2), une troisième broche de transmission de données (D2-), une quatrième broche de transmission de données (D2+) ;
un convertisseur de puissance (112) couplé à la troisième broche de transmission de données (D2-), à la quatrième broche de transmission de données (D2+) et à la seconde broche de terre (GND2), dans lequel la quatrième broche de transmission de données (D2+) est court-circuitée avec la seconde broche de terre (GND2), et le convertisseur de puissance (112) est configuré pour permettre au courant alternatif d'être soumis à une conversion CA/CC, afin de fournir le courant de chargement (I1) à la seconde broche d'alimentation (VBUS2) et à la troisième broche de transmission de données (D2-) ; et
une seconde diode (114) couplée entre le convertisseur de puissance (112) et la seconde broche d'alimentation (VBUS2), dans lequel une anode de la seconde diode (114) est couplée au convertisseur de puissance et une cathode est couplée à la seconde broche d'alimentation (VBUS2) ; et
dans lequel le dispositif de chargement portatif peut être relié au transformateur.

2. Système de chargement portatif (100) selon la revendication 1, dans lequel la seconde broche d'alimentation (VBUS2) et la troisième broche de transmission de données (D2-) sont couplées à la première broche d'alimentation (VBUS1) et à la première broche de transmission de données (D1-) par un câble de transmission (106), respectivement, alors que la quatrième broche de transmission de données (D2+) et la seconde broche de terre (GND2) sont couplées à la seconde broche de transmission de données (D1+) et à la première broche de terre (GND1) par le câble de transmission (106), respectivement ;
le câble de transmission (106) offre ainsi le trajet du courant de chargement (I1).

3. Système de chargement portatif (100) selon la revendication 1, dans lequel la seconde broche d'alimentation (VBUS2), la troisième broche de transmission de données (D2-), la quatrième broche de transmission de données (D2+) et la seconde broche de terre (GND2) sont des broches de connexion d'une interface USB, alors que la première broche d'alimentation (VBUS1), la première broche de transmission de données (D1-), la seconde broche de transmission de données (D1+) et la première broche de terre (GND1) sont des broches de connexion d'une interface micro USB.
